# EUROPEAN PATENT APPLICATION

(11) **EP 4 213 328 A1**
(43) Date of publication of application: **19.07.2023**
(21) Application number: 23151555.2
(22) Date of filing: 13.01.2023
(51) Int. Cl.: H02J 1/08, H02J 9/06

(54) **ELECTRIC POWER CONVERSION SYSTEM AND VEHICLE**

(30) Priority: 14.01.2022 CN 202210042462
(71) Applicant: Huawei Digital Power Technologies Co., Ltd., Shenzhen, 518043 (CN)
(72) Inventor: DOU, Jiqing, 518043 Shenzhen (CN); WANG, Quanwu, 518043 Shenzhen (CN); FENG, Ningbo, 518043 Shenzhen (CN); CHEN, Bing, 518043 Shenzhen (CN); LI, Ping, 518043 Shenzhen (CN)
(74) Representative: Gill Jennings & Every LLP

(57) **Abstract**

This application provides an electric power conversion system and a vehicle, to improve vehicle availability. The electric power conversion system may receive electric energy provided by a first power supply, and supply power to at least one load module. The system may include a first direct current to direct current conversion module and a second direct current to direct current conversion module. The first direct current to direct current conversion module is configured to perform voltage conversion processing on the electric energy, and provide the electric energy to the at least one load module. The second direct current to direct current conversion module is configured to perform voltage conversion processing on the electric energy, and provide the electric energy to the at least one load module.

## Description

### TECHNICAL FIELD

This application relates to the field of electronic technologies, and in particular, to an electric power conversion system and a vehicle.

### BACKGROUND

More vehicles are entering people's life, and requirements for safety and usability of vehicles are increasingly high. Some of modules in a vehicle are low-voltage load modules, for example, modules such as an autonomous driving system and an in-vehicle infotainment system. If a module supplying power to the low-voltage load module in the vehicle is faulty, for example, a storage battery is faulty, normal traveling of the vehicle cannot be ensured, or even the entire vehicle is out of control.

### SUMMARY

An objective of this application is to provide an electric power conversion system and a vehicle, to improve vehicle usability.

According to a first aspect, an embodiment of this application provides an electric power conversion system, configured to: receive electric energy provided by a first power supply and supply power to at least one load module. A device to which the at least one load module belongs may be a device such as a vehicle, a server, or a base station, and the first power supply may be a power supply in the device to which the at least one load module belongs. The following provides description by using an example in which the device to which the at least one load module belongs is a vehicle, and the electric power conversion system may supply power to a low-voltage load module in the vehicle. The vehicle may be a vehicle equipped with a low-voltage load module. For example, the vehicle may be a fuel vehicle or a new energy vehicle. The new energy vehicle may include but is not limited to an electric vehicle, a hybrid electric vehicle, and the like. This is not excessively limited in this application. The load module may include but is not limited to at least one major load and/or at least one minor load. The major load may be understood as a load that affects traveling of a vehicle, such as a control system, an autonomous driving system, or a navigation system. The minor load may be understood as a load that does not affect traveling of the vehicle, such as a vehicle radio. In some scenarios, the load module may include a plurality of major loads, and the plurality of major loads have a same function. For example, the load module may include dual major loads, namely, major dual loads.

The electric power conversion system provided in this embodiment of this application may include a first direct current to direct current conversion module and a second direct current to direct current conversion module. The first direct current to direct current conversion module may perform voltage conversion processing on the electric energy, and then provide the electric energy to the at least one load module. The second direct current to direct current conversion module may perform voltage conversion processing on the electric energy, and then provide the electric energy to the at least one load module. If one direct current to direct current conversion module in the electric power conversion system is faulty, another direct current to direct current conversion module may continue to supply power to the at least one load module, to avoid a case in which none of the at least one load module can work and consequently the vehicle cannot normally run.

In a possible design, the at least one load module includes a first load module and a second load module. The system may further include a fault isolation module; and an input side of the first direct current to direct current conversion module is coupled to the first power supply. An output side of the first direct current to direct current conversion module is coupled to the first load module, and the output side of the first direct current to direct current conversion module is further coupled to the second load module by using the fault isolation module. The fault isolation module may connect or disconnect the first direct current to direct current conversion module to/from the second load module.

In this embodiment of this application, when the vehicle is faulty, for example, when the second load module is faulty, the fault isolation module may disconnect or isolate the first direct current to direct current conversion module from the second load module, to prevent a short circuit current generated by the fault of the second load module from flowing back to the first direct current to direct current conversion module. The first direct current to direct current conversion module may continue to supply power to the first load module, to ensure that the first load module normally works, so that the vehicle can normally run, and vehicle usability is improved.

In a possible design, an input side of the second direct current to direct current conversion module is coupled to the first power supply; an output side of the second direct current to direct current conversion module is coupled to a target load module, where the target load module is any load module in the at least one load module; and the output side of the second direct current to direct current conversion module is further coupled to a load module other than the target load module in the at least one load module by using the fault isolation module.

In some examples, the input side of the second direct current to direct current conversion module is coupled to the first power supply. The output side of the second direct current to direct current conversion module is coupled to the first load module, and the output side of the second direct current to direct current conversion module is further coupled to the second load module by using the fault isolation module. The fault isolation module is further configured to connect or disconnect the second direct current to direct current conversion module to/from the second load module. In this design, the second direct current to direct current conversion module may directly supply power to the first load module, and supply power to the second load module by using the fault isolation module. When the second load module is faulty, the fault isolation module may disconnect the second load module from the second direct current to direct current conversion module, to prevent a short circuit current from flowing back to the second direct current to direct current conversion module. The second direct current to direct current conversion module may continue to supply power to the first load module, to ensure that the first load module normally works, so that the vehicle can normally run, and vehicle usability is improved.

In some other examples, the input side of the second direct current to direct current conversion module is coupled to the first power supply; the output side of the second direct current to direct current conversion module is coupled to the second load module; and the output side of the second direct current to direct current conversion module is further coupled to the first load module by using the fault isolation module, and the fault isolation module is further configured to connect or disconnect the second direct current to direct current conversion module to/from the first load module. In this design, the second direct current to direct current conversion module may directly supply power to the second load module, and supply power to the first load module by using the fault isolation module. When the first load module is faulty, the fault isolation module may disconnect the first load module from the second direct current to direct current conversion module, to prevent a short circuit current from flowing back to the second direct current to direct current conversion module. The second direct current to direct current conversion module may continue to supply power to the second load module, to ensure that the second load module normally works, so that the vehicle can normally run, and vehicle usability is improved.

In a possible design, the at least one load module may be coupled to a second power supply, and the second power supply may be a power supply in the vehicle, or may be a power supply in the electric power conversion system. A voltage of electric energy provided by the second power supply is less than a voltage of the electric energy provided by the first power supply. In a scenario in which the second power supply is a power supply in the vehicle, a power battery in the vehicle may be implemented as the foregoing first power supply. An auxiliary battery in the vehicle may be implemented as the second power supply, such as a lithium battery or a storage battery, and may supply power to the load module. Some load modules in the at least one load module are coupled to the second power supply, and the second power supply is coupled to some other load modules in the at least one load module by using the fault isolation module. The voltage of the electric energy provided by the second power supply is less than the voltage of the electric energy provided by the first power supply. The fault isolation module may connect or disconnect the second power supply to/from the some other load modules.

In this embodiment of this application, the fault isolation module may connect the second power supply to the some other load modules, so that the second power supply supplies power to all load modules. The fault isolation module may disconnect the second power supply from the some other load modules, and may also disconnect the second power supply from the first direct current to direct current conversion module, and disconnect the second power supply from the second direct current to direct current conversion module, to avoid a fault of the first direct current to direct current conversion module, the second direct current to direct current conversion module, and the other load modules due to a fault of the second power supply.

In a possible design, the fault isolation module may be in a disconnected state when a fault occurs. The first direct current to direct current conversion module may be disconnected from the second load module; and/or, the second direct current to direct current conversion module may be disconnected from the first load module, or the second direct current to direct current conversion module may be disconnected from the second load module; and/or, the second power supply may be disconnected from the some other load modules. In some scenarios, the device fault may include but is not limited to one or more of the following faults: a fault of any load module in the at least one load module; a fault of the second power supply of the device; and a fault of the first direct current to direct current conversion module, or a fault of the second direct current to direct current conversion module.

In a possible design, the fault isolation module includes at least one electronic switch, and the electronic switch may include but is not limited to one or more of a plurality of types of switching transistors such as a metal oxide semiconductor field effect transistor (metal oxide semiconductor field effect transistor, MOSFET), a bipolar junction transistor (bipolar junction transistor, BJT), and an insulated gate bipolar transistor (insulated gate bipolar transistor, IGBT), which are not listed one by one again in this embodiment of this application; and/or, the fault isolation module includes at least one mechanical switch, and the mechanical switch may include but is not limited to one or more of a plurality of types of switching transistors, such as a relay and a contactor. One or more functions of the fault isolation module in the foregoing embodiment are implemented by controlling the at least one electronic switch or the at least one mechanical switch.

In a possible design, the first direct current to direct current conversion module, the second direct current to direct current conversion module, and the fault isolation module may be disposed in a same integrated circuit, for example, disposed on a same printed circuit board, to increase an integration level of the electric power conversion system, so that mounting can be facilitated, and power distribution can be simplified. In some examples, the first direct current to direct current conversion module, the second direct current to direct current conversion module, and the fault isolation module may be disposed in a plurality of integrated circuits, for example, disposed on a plurality of printed circuit boards.

In a possible design, the electric power conversion system further includes a housing. The housing may accommodate the first direct current to direct current conversion module, the second direct current to direct current conversion module, and the fault isolation module. In this embodiment of this application, the first direct current to direct current conversion module, the second direct current to direct current conversion module, and the fault isolation module are integrated by using the housing, so that the electric power conversion system has a high integration level. This facilitates mounting into the device and reduces power distribution.

According to a second aspect, an embodiment of this application provides a vehicle. The vehicle may include a first power supply, at least one load module, and an electric power conversion system. The electric power conversion system is configured to: receive electric energy provided by the first power supply and supply power to the at least one load module. The electric power conversion system includes a first direct current to direct current conversion module and a second direct current to direct current conversion module. The first direct current to direct current conversion module is coupled to the first power supply and the at least one load module, and may be configured to: perform voltage conversion processing on the electric energy, and then provide the electric energy to the at least one load module. The second direct current to direct current conversion module is coupled to the first power supply and the at least one load module, and may be configured to: perform voltage conversion processing on the electric energy, and then provide the electric energy to the at least one load module.

In a possible design, the electric power conversion system further includes a fault isolation module. An input side of the first direct current to direct current conversion module is coupled to the first power supply. An output side of the first direct current to direct current conversion module is coupled to the first load module, and the output side of the first direct current to direct current conversion module is further coupled to the second load module by using the fault isolation module. The fault isolation module may be configured to connect or disconnect the first direct current to direct current conversion module to/from the second load module.

In a possible design, the input side of the second direct current to direct current conversion module is coupled to the first power supply. The output side of the second direct current to direct current conversion module is coupled to the first load module; and the output side of the second direct current to direct current conversion module is further coupled to the second load module by using the fault isolation module, and the fault isolation module is further configured to connect or disconnect the second direct current to direct current conversion module to/from the second load module.

In a possible design, the input side of the second direct current to direct current conversion module is coupled to the first power supply; the output side of the second direct current to direct current conversion module is coupled to the second load module; and the output side of the second direct current to direct current conversion module is further coupled to the first load module by using the fault isolation module, and the fault isolation module is further configured to connect or disconnect the second direct current to direct current conversion module to/from the first load module.

In a possible design, the vehicle further includes a second power supply. Some load modules in the at least one load module are coupled to the second power supply, and the second power supply is coupled to some other load modules in the at least one load module by using the fault isolation module. A voltage of electric energy provided by the second power supply is less than a voltage of the electric energy provided by the first power supply. The fault isolation module is further configured to connect or disconnect the second power supply to/from the some other load modules.

In a possible design, the fault isolation module may be in a disconnected state when a fault occurs. The first direct current to direct current conversion module may be disconnected from the second load module; and/or, the second direct current to direct current conversion module may be disconnected from the first load module, or the second direct current to direct current conversion module may be disconnected from the second load module.

In a possible design, the fault may include but is not limited to one or more of the following faults: a fault of any load module in the at least one load module; a fault of the second power supply; and a fault of the first direct current to direct current conversion module, or a fault of the second direct current to direct current conversion module.

For technical effects that can be achieved by any possible design in the second aspect, refer to the technical effects that can be achieved by any possible design in the first aspect. Details are not described herein again. These aspects or other aspects of this application are clearer and more comprehensible in descriptions of the following embodiments.

### BRIEF DESCRIPTION OF DRAWINGS

FIG. 1 is a schematic diagram of a structure of a vehicle according to an embodiment of this application;
FIG. 2 is a schematic diagram of a structure of an electric power conversion system according to an embodiment of this application;
FIG. 3 is a schematic diagram of a structure of an electric power conversion system according to an embodiment of this application; and
FIG. 4 is a schematic diagram of a structure of an electric power conversion system according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. It should be noted that, in the description of this application, "at least one" means one or more, and "a plurality of" means two or more. In view of this, "a plurality of" may also be understood as "at least two" in embodiments of the present invention. The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects. In addition, it should be understood that in description of this application, terms such as "first" and " second" are merely used for distinguishing and description, but should not be understood as indicating or implying relative importance, or should not be understood as indicating or implying a sequence.

It should be noted that, "coupling" in embodiments of this application may be understood as an electrical connection, and coupling between two electrical elements may be direct or indirect coupling between the two electrical elements. For example, that A is connected to B may mean that A is directly coupled to B, or mean that A is indirectly coupled to B by using one or more other electrical elements. For example, that A is coupled to B may mean that A is directly coupled to C, C is directly coupled to B, and A is coupled to B by using C. In some scenarios, "coupling" may also be understood as connection. In short, coupling between A and B may enable electrical energy to be transmitted between A and B.

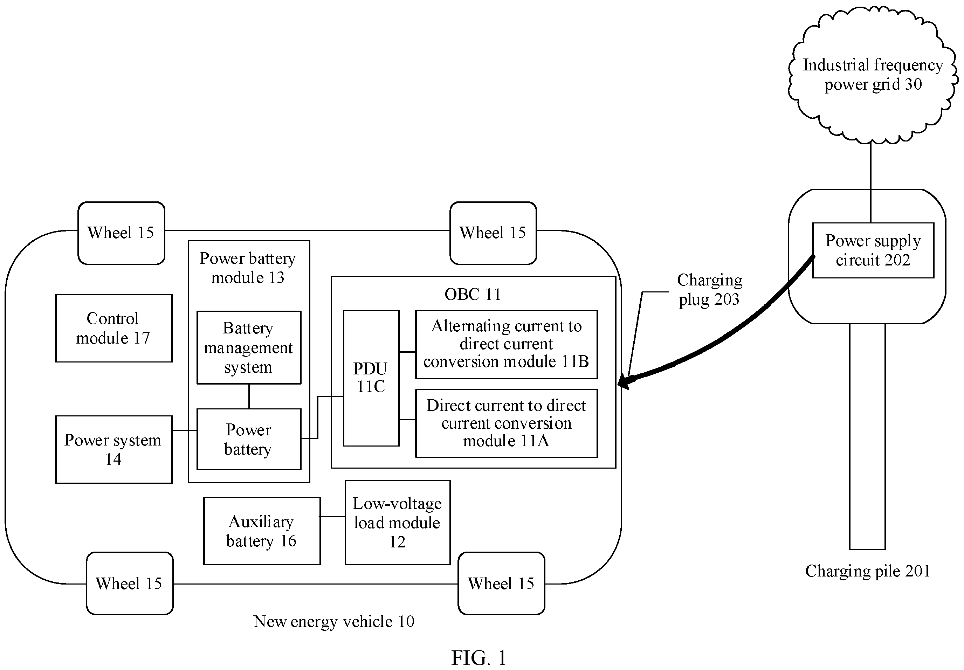

The following clearly and completely describes the technical solutions in embodiments of this application with reference to the accompanying drawings in embodiments of this application. An electric power conversion system provided in embodiments of this application may be applied to a device with a load module. The device may include but is not limited to a device such as a vehicle, a server, or a base station. The following provides description by using an example in which the device is a vehicle. The vehicle may be a fuel vehicle or a new energy vehicle. The new energy vehicle may include but is not limited to an electric vehicle, a hybrid electric vehicle, and the like. This is not excessively limited in this application. The following uses an example in which the vehicle is a new energy vehicle. FIG. 1 is an example schematic diagram of a structure of a system of a vehicle. As shown in FIG. 1, the new energy vehicle 10 mainly includes an on board charger (on board charger, OBC) 11, at least one low-voltage load module 12, a power battery module 13, a power system 14, wheels 15, and an auxiliary battery 16.

The power battery module 13 may include a power battery and a battery management system. The battery management system may include a battery management unit, and the battery management unit may manage the power battery. The battery management system may further include a battery detection unit, which may be configured to detect whether the power battery is faulty. The power battery may be a large-capacity and high-power storage battery.

The power system 14 may generally include a retarder, one or more motors, and the like. When the new energy vehicle travels, the power battery may supply power to the power system 14, and the motor in the power system 14 may further drive the wheels 15 to rotate, to implement movement of the vehicle.

The low-voltage load module 12 may be a functional system or a vehicle-mounted device inside the vehicle (the new energy vehicle 10). In addition, a rated voltage of the low-voltage load module 12 is far lower than a rated voltage of the power battery. Each low-voltage load module 12 may include but is not limited to at least one major load and/or at least one minor load. The major load may be understood as a load that affects traveling of a vehicle, such as a control system, an autonomous driving system, or a vehicle-mounted navigator. The minor load may be understood as a load that does not affect traveling of the vehicle, such as a vehicle radio. In some scenarios, the low-voltage load module 12 may include a plurality of major loads, and the plurality of major loads have a same function. For example, one low-voltage load module 12 may include dual major loads, namely, major dual loads. For example, the low-voltage load module includes two paths of vehicle-mounted navigators. In some scenarios, the new energy vehicle 10 may include a plurality of low-voltage load modules 12 having same or similar functions or structures, to avoid that the new energy vehicle 10 cannot normally travel due to a fault of one low-voltage load module 12.

When the new energy vehicle 10 is charged, the new energy vehicle 10 may be usually charged by using a charging pile 201. As shown in FIG. 1, the charging pile 201 mainly includes a power supply circuit 202 and a charging plug 203. An input terminal of the power supply circuit 202 may receive alternating current electric energy provided by an industrial frequency power grid 30, and an output terminal of the power supply circuit 202 is connected to the charging plug 203 by using a cable. Generally, the power supply circuit 202 may convert the received alternating current into charging electric energy adapted to the new energy vehicle 10. The charging electric energy obtained after conversion by the power supply circuit 202 may be input to the OBC 11 by using the charging plug 203. For example, the power supply circuit 202 may output alternating current electric energy or direct current electric energy by using the charging plug 203.

The OBC 11 provides a part of the received charging electric energy to the power battery, and the power battery further stores the part of electric energy. In some scenarios, the OBC 11 may further provide the other part of the received charging electric energy to the auxiliary battery 16. The auxiliary battery 16 may be a lead-acid battery, a lithium battery, or the like. The auxiliary battery 16 may store this part of electric energy, and the low-voltage load module 12 may work by using this part of electric energy.

In some scenarios, a direct current to direct current conversion module 11A may be disposed in the OBC 11, and may be configured to supply power to the low-voltage load module 12 in the vehicle. The OBC 11 may generally include an alternating current to direct current conversion module 11B, which may receive alternating current electric energy provided by the alternating current charging pile, and convert the alternating current electric energy into direct current electric energy.

The OBC 11 may further include a high-voltage power distribution unit (power distribution unit, PDU) 11C, which may receive electric energy output by the direct current to direct current conversion module 11A, or receive electric energy output by the alternating current to direct current conversion module 11B. The PDU 11C may allocate and manage received electric energy. For example, the PDU 11C may provide the received electric energy to the power battery, to charge the power battery.

The new energy vehicle 10 may further include a control module 17. The control module 17 may include any one of a vehicle control unit (vehicle control unit, VCU), a microcontroller unit (microcontroller unit, MCU), a general-purpose central processing unit (central processing unit, CPU), a general-purpose processor, a digital signal processor (digital signal processor, DSP), an application-specific integrated circuit (application specific integrated circuits, ASIC), a field programmable gate array (field programmable gate array, FPGA), and the like, or may be any one or a combination of another programmable logic device, a transistor logic device, and a hardware component. The control module 17 may control some or all of the modules in the new energy vehicle 10. For example, the auxiliary battery 16 is controlled to supply power to the low-voltage load module 12.

Because the auxiliary battery 16 has a limited energy storage capacity, it is difficult to continuously supply power to the low-voltage load module 12 for a long time. Currently, the new energy vehicle 10 generally includes an electric power conversion system. The electric power conversion system includes a direct current to direct current conversion module. The direct current to direct current conversion module may perform buck processing on the electric energy provided by the power battery (denoted as a first power supply below), and then supply power to the low-voltage load module 12. When the direct current to direct current conversion module is faulty, the auxiliary battery 16 may supply power to the low-voltage load module 12. However, because the auxiliary battery 16 has a limited energy storage capacity, a backup time is short. It is difficult to supply power to the low-voltage load module 12 for a long time. As a result, major loads such as a control system, an autonomous driving system, and a navigation system cannot work. Consequently, the new energy vehicle 10 cannot normally travel, and usability of the new energy vehicle 10 is low.

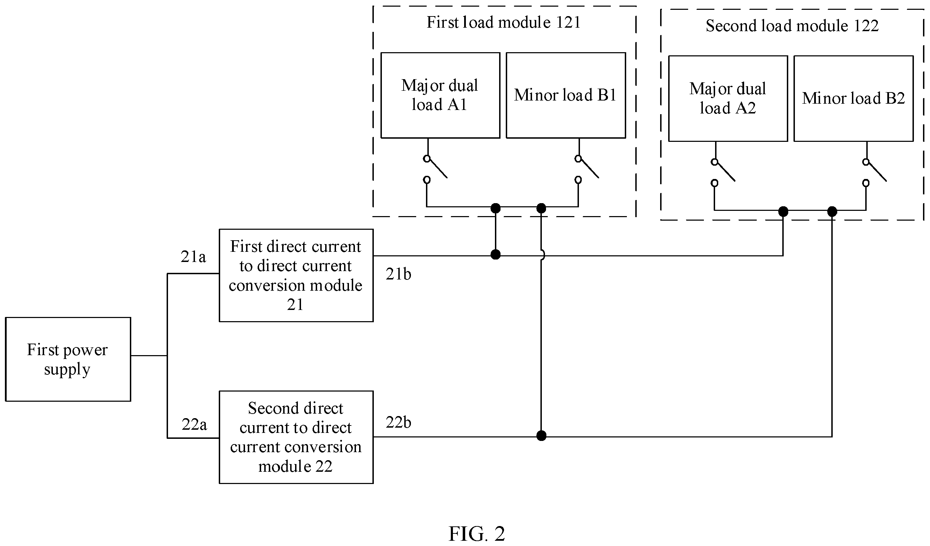

In view of this, first, an embodiment of this application provides an electric power conversion system, to improve vehicle usability. Referring to FIG. 2, an embodiment of this application provides an electric power conversion system. It should be noted that, the electric power conversion system provided in this embodiment of this application may be applied to a vehicle. The following provides description by using an example of supplying power to a plurality of low-voltage load modules 12 of a new energy vehicle 10. The electric power conversion system provided in this embodiment of this application may be further applied to another device, for example, a device including a plurality of load modules. For example, the electric power conversion system is applied to a scenario of supplying power to a plurality of load modules in a server or a scenario of supplying power to a plurality of load modules in a base station, to improve usability of the server and the base station. This is not excessively limited in this application. The following provides description by using an example in which the electric power conversion system is applied to the new energy vehicle 10.

The electric power conversion system may include a first direct current to direct current conversion module 21 and a second direct current to direct current conversion module 22. The first direct current to direct current conversion module 21 may have a direct current voltage conversion processing capability, such as a buck conversion processing capability, or may have a boost conversion processing capability. In some examples, the first direct current to direct current conversion module 21 may include but is not limited to a direct current to direct current conversion circuit. The second direct current to direct current conversion module 22 has a direct current voltage conversion processing capability, for example, a buck conversion processing capability, or may have a boost conversion processing capability. In some examples, the second direct current to direct current conversion module 22 may include but is not limited to a direct current to direct current conversion circuit.

In a scenario in which the electric power conversion system is applied to a vehicle, the electric power conversion system may receive electric energy of a first power supply, and supply power to at least one load module. Both the first direct current to direct current conversion module 21 and the second direct current to direct current conversion module 22 may supply power to the at least one load module. For example, when the at least one load module includes only one load module, both the first direct current to direct current conversion module 21 and the second direct current to direct current conversion module 22 may supply power to the load module. If a direct current to direct current conversion module in the electric power conversion system is faulty, another direct current to direct current conversion module may continue to supply power to the load module.

As shown in FIG. 2, an input side 21a of the first direct current to direct current conversion module 21 may be coupled to the first power supply, an output side 21b of the first direct current to direct current conversion module 21 may be coupled to a first load module 121, and the output side 21b of the first direct current to direct current conversion module 21 may be coupled to a second load module 122.

An input side 22a of the second direct current to direct current conversion module 22 may be coupled to the first power supply, an output side 22b of the second direct current to direct current conversion module 22 may be coupled to the first load module 121, and the output side 22b of the second direct current to direct current conversion module 22 may be coupled to the second load module 122.

The first direct current to direct current conversion module 21 may supply power to the first load module 121 and the second load module 122. The second direct current to direct current conversion module 22 may supply power to the first load module 121 and the second load module 122. When one of the first direct current to direct current conversion module 21 and the second direct current to direct current conversion module 22 is faulty, the direct current to direct current conversion module that is not faulty may continue to supply power to the first load module 121 and the second load module 122, to ensure that the first load module 121 and the second load module 122 normally work, so that the new energy vehicle 10 can normally run.

Usually, the auxiliary battery 16 (denoted as a second power supply below) in the new energy vehicle 10 may supply power to some low-voltage load modules. In this embodiment of this application, an example in which the second power supply supplies power to the second load module 122 is used for description. In some possible scenarios, when the load modules or the second power supply is faulty, a case of short circuit may occur. A short circuit current flows back to the first direct current to direct current conversion module 21 and the second direct current to direct current conversion module 22, causing damage to the first direct current to direct current conversion module 21 and the second direct current to direct current conversion module 22. As a result, the first direct current to direct current conversion module 21 and the second direct current to direct current conversion module 22 cannot supply power to the first load module 121 and the second load module 122. As a result, the new energy vehicle 10 cannot normally run.

The at least one load module may include a plurality of load modules. Still referring to FIG. 2, the plurality of load modules may include but are not limited to the first load module 121 and the second load module 122. The direct current to direct current conversion modules, the load modules, the power supplies, and the like in the accompanying drawings in embodiments of this application may be used to describe a working principle of the electric power conversion system. Quantities of the direct current to direct current conversion modules, the load modules, the power supplies, and the like are not used as a specific limitation on the structure of the electric power conversion system. For example, the electric power conversion system provided in this embodiment of this application may further include three or more direct current to direct current conversion modules, which may supply power to three or more load modules.

In some scenarios, each load module may include but is not limited to at least one major load and/or at least one minor load. The major load may be understood as a load that affects traveling of the new energy vehicle 10, such as a control system, an autonomous driving system, or a vehicle-mounted navigator. The minor load may be understood as a load that does not affect traveling of the new energy vehicle 10, such as a vehicle radio.

For example, the first load module 121 may include a major dual load A1, which is also a dual major load. The first load module 121 may further include a minor load B1. A receive end of the major dual load A1 and a receive end of the minor load B1 may be separately coupled to the output side 21b of the first direct current to direct current conversion module 21 by using a switch, and coupled to the output side 22b of the second direct current to direct current conversion module 22. The second load module 122 may also include a minor load B2. A receive end of a major dual load A2 and a receive end of the minor load B2 may be separately coupled to the output side 21b of the first direct current to direct current conversion module 21 by using a switch, and coupled to the output side 22b of the second direct current to direct current conversion module 22. In some scenarios, the first load module 121 and the second load module 122 may be load modules having same or similar structures or functions. This is not excessively limited in this application.

Based on the electric power conversion system provided in the foregoing embodiment, the electric power conversion system may further include a fault isolation module 23. The output side of the first direct current to direct current conversion module 21 may be coupled to the first load module 121, or may be coupled to the second load module 122 by using the fault isolation module 23.

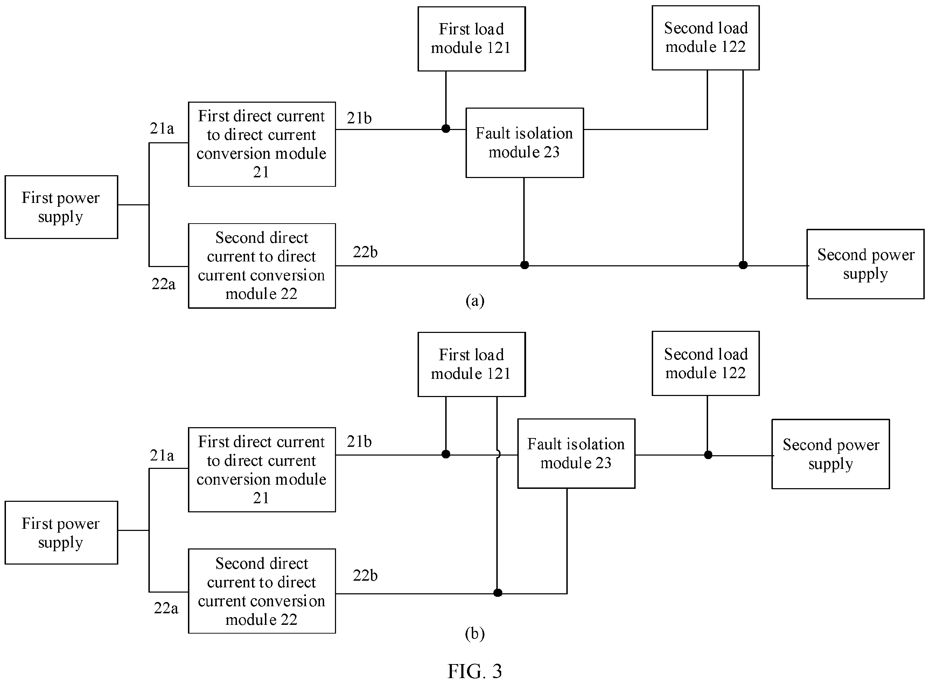

The output side of the second direct current to direct current conversion module 22 may be coupled to a target load module, and the target load module may be the first load module 121 or the second load module 122. The output side of the second direct current to direct current conversion module 22 may be further coupled to another load module other than the target load module by using the fault isolation module. In the electric power conversion system shown in (a) in FIG. 3 according to an example embodiment, the target load module to which the output side of the second direct current to direct current conversion module 22 is coupled is the second load module 122, and the output side of the second direct current to direct current conversion module 22 is further coupled to the first load module 121 by using the fault isolation module 23.

In the electric power conversion system shown in (b) in FIG. 3 according to an example embodiment, the target load module to which the output side of the second direct current to direct current conversion module 22 is coupled is the first load module 121, and the output side of the second direct current to direct current conversion module 22 is further coupled to the second load module 122 by using the fault isolation module 23.

The following provides description by using an example in which the target load module is the second load module 122. As shown in (a) in FIG. 3, the input side 21a of the first direct current to direct current conversion module 21 may be coupled to the first power supply, the output side 21b of the first direct current to direct current conversion module 21 may be coupled to the first load module 121, and the output side 21b of the first direct current to direct current conversion module 21 may be coupled to the fault isolation module 23. The first direct current to direct current conversion module 21 may perform voltage conversion processing, for example, buck conversion processing, on a first voltage provided by the first power supply, and provide a second voltage obtained after the buck processing to the first load module 121 and the fault isolation module 23.

The input side 22a of the second direct current to direct current conversion module 22 may be coupled to the first power supply, the output side 22b of the second direct current to direct current conversion module 22 may be coupled to the second load module 122, and the output side 22b of the second direct current to direct current conversion module 22 may be coupled to the fault isolation module 23. The second direct current to direct current conversion module 22 may perform voltage conversion processing, for example, buck conversion processing, on the first voltage provided by the first power supply, and provide electric energy obtained after the buck processing to the second load module 122 and the fault isolation module 23.

The fault isolation module 23 may be coupled to the output side 21b of the first direct current to direct current conversion module 21 and coupled to the second load module 122. The fault isolation module 23 may connect the first direct current to direct current conversion module 21 to the second load module 122, so that the first direct current to direct current conversion module 21 supplies power to the second load module 122. The fault isolation module 23 may be further coupled to the output side 22b of the second direct current to direct current conversion module 22 and coupled to the second load module 122, so that the second direct current to direct current conversion module 22 supplies power to the second load module 122.

The fault isolation module 23 may have a fault isolation capability, and may disconnect (or isolate) the direct current to direct current conversion modules from the load modules. For example, the fault isolation module 23 may disconnect the first direct current to direct current conversion module 21 from the second load module 122, so that a circuit between the first direct current to direct current conversion module 21 and the second load module 122 is broken, and no electric energy is transmitted between the first direct current to direct current conversion module 21 and the second load module 122. For another example, the fault isolation module 23 may disconnect the second direct current to direct current conversion module 22 from the first load module 121, so that a circuit between the second direct current to direct current conversion module 22 and the first load module 121 is broken, and no electric energy is transmitted between the second direct current to direct current conversion module 22 and the first load module 121.

If the second load module 122 or the second power supply is faulty, the fault isolation module 23 may disconnect the first direct current to direct current conversion module 21 from the second load module 122, to prevent a short circuit current from flowing back to the first direct current to direct current conversion module 21 and another load module. In some scenarios, the fault isolation module 23 may also disconnect the second direct current to direct current conversion module 22 from the second load module, to prevent a short circuit current from flowing back to the second direct current to direct current conversion module 22, and prevent the second direct current to direct current conversion module 22 from being damaged.

Similarly, if the first load module 121 is faulty, the fault isolation module 23 may disconnect the first load module 121 from the second direct current to direct current conversion module 22. The fault isolation module 23 may also disconnect the first load module 121 from another load module. In this way, the short circuit current is prevented from flowing back to the second direct current to direct current conversion module 22 and another load module.

Under control of a control module of the electric power conversion system or under control of the control module 17 of the new energy vehicle 10, the fault isolation module 23 in the electric power conversion system provided in this embodiment of this application may connect the first direct current to direct current conversion module 21 to the second load module 122, disconnect the first direct current to direct current conversion module 21 from the second load module 122, connect the second direct current to direct current conversion module 22 to the first load module 121, or disconnect the second direct current to direct current conversion module 22 from the first load module 121. The control module in the electric power conversion system or the control module 17 of the new energy vehicle 10 may detect whether a fault occurs in the power supply, the load module, or the direct current to direct current conversion module, and control the fault isolation module 23.

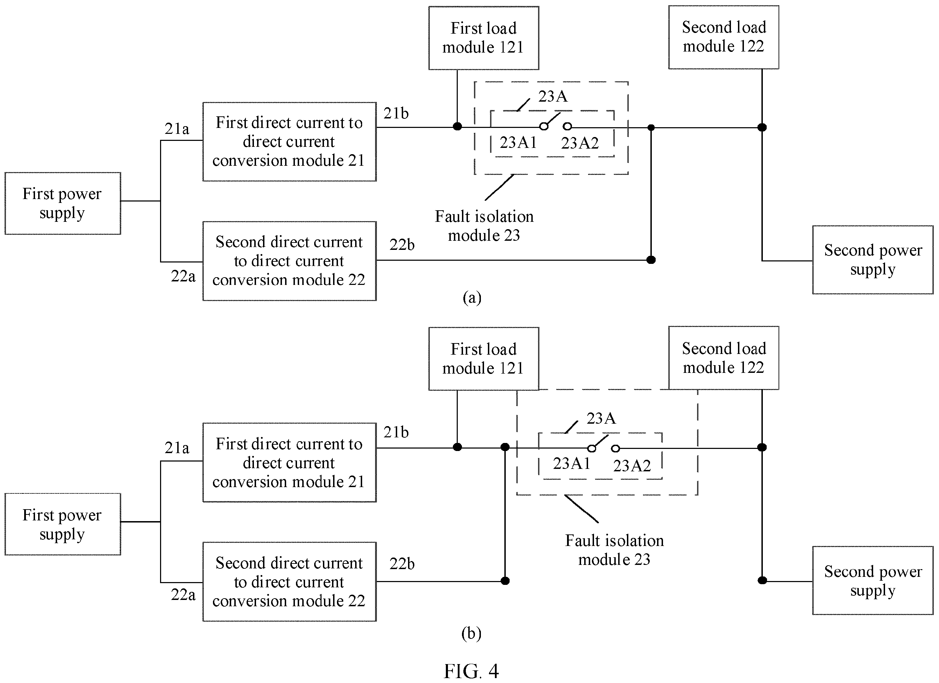

In a possible design, the fault isolation module 23 may include a switch circuit. As shown in (a) in FIG. 4, the switch circuit of the fault isolation module 23 may include a first switch 23A. One port 23A1 of the first switch 23A is coupled to the first direct current to direct current conversion module 21, and the other port 23A2 is separately coupled to the second load module 122 and the second direct current to direct current conversion module 22.

When the first switch 23A is in a connected state, electric energy provided by the first direct current to direct current conversion module 21 may be transmitted to the second load module 122, so that the first direct current to direct current conversion module 21 supplies power to the second load module 122. Electric energy provided by the second direct current to direct current conversion module 22 may be further transmitted to the first load module 121, so that the second direct current to direct current conversion module 22 supplies power to the first load module 121. The electric energy provided by the second power supply may be provided to the first load module 121 by using the fault isolation module 23. It can be learned that the first direct current to direct current conversion module 21, the second direct current to direct current conversion module 22, and the second power supply may jointly supply power to the first load module 121 and the second load module 122.

When the first switch 23A is in a disconnected state, a circuit between the first direct current to direct current conversion module 21 and the second load module 122 may be broken, to disconnect the first direct current to direct current conversion module 21 from the second load module 122. A circuit between the second direct current to direct current conversion module 22 and the first load module 121 may also be broken, to disconnect the second direct current to direct current conversion module 22 from the first load module 121.

If the second load module 122 or the second power supply is faulty, the fault isolation module 23 may disconnect the first direct current to direct current conversion module 21 from the second load module 122, to avoid damage to the first direct current to direct current conversion module 21 and another load module. In this way, the first direct current to direct current conversion module 21 may continue to supply power to the first load module 121, to ensure that the new energy vehicle 10 can normally run.

Similarly, if the first load module 121 is faulty, the fault isolation module 23 may disconnect the first load module 121 from the second direct current to direct current conversion module 22, to avoid damage to the second direct current to direct current conversion module 22 and another load module. In this way, the second direct current to direct current conversion module 22 may continue to supply power to the second load module 122, to ensure that the new energy vehicle 10 can normally run.

In a possible design, the fault isolation module 23 may include a switch circuit. As shown in (b) in FIG. 4, the switch circuit of the fault isolation module 23 may include a first switch 23A. One port 23A1 of the first switch 23A is separately coupled to the first direct current to direct current conversion module 21 and the second direct current to direct current conversion module 22. The other port 23A2 of the first switch 23A is coupled to the second load module 122.

When the first switch 23A is in a connected state, electric energy provided by the first direct current to direct current conversion module 21 may be transmitted to the second load module 122, so that the first direct current to direct current conversion module 21 supplies power to the second load module 122. Electric energy provided by the second direct current to direct current conversion module 22 may be further transmitted to the second load module 122, so that the second direct current to direct current conversion module 22 supplies power to the second load module 122. The electric energy provided by the second power supply may be provided to the first load module 121 by using the fault isolation module 23. It can be learned that the first direct current to direct current conversion module 21, the second direct current to direct current conversion module 22, and the second power supply may jointly supply power to the first load module 121 and the second load module 122.

When the first switch 23A is in a disconnected state, a circuit between the first direct current to direct current conversion module 21 and the second load module 122 may be broken, to disconnect the first direct current to direct current conversion module 21 from the second load module 122. A circuit between the second direct current to direct current conversion module 22 and the second load module 122 may also be broken, to disconnect the second direct current to direct current conversion module 22 from the second load module 122.

If the second load module 122 or the second power supply is faulty, the fault isolation module 23 may disconnect the first direct current to direct current conversion module 21 from the second load module 122, and disconnect the second direct current to direct current conversion module 22 from the second load module 122, to avoid damage to the first direct current to direct current conversion module 21, the second direct current to direct current conversion module 22, and another load module. In this way, the first direct current to direct current conversion module 21 and the second direct current to direct current conversion module 22 may continue to supply power to the first load module 121, to ensure that the new energy vehicle 10 can normally run.

Similarly, if the first load module 121 is faulty, the fault isolation module 23 may disconnect the first load module 121 from the second load module 122, and disconnect the first load module 121 from the second power supply, to avoid damage to another load module and the second power supply. In this way, the second power supply can supply power to the second load module, to ensure that the new energy vehicle 10 can normally run.

Based on the electric power conversion system provided in any one of the foregoing embodiments, if a direct current to direct current conversion module in the electric power conversion system is faulty, assuming that the first direct current to direct current conversion module 21 is faulty, another direct current to direct current conversion module in the electric power conversion system, for example, the second direct current to direct current conversion module 22, may continue to supply power to the first load module 121 and the second load module 122, to ensure normal working of the first load module 121 and the second load module 122, thereby avoiding a failure of the new energy vehicle 10 to normally travel.

In a possible implementation, the first direct current to direct current conversion module 21, the second direct current to direct current conversion module 22, and the fault isolation module 23 may be disposed in a same integrated circuit. If the first direct current to direct current conversion module 21, the second direct current to direct current conversion module 22, and the fault isolation module 23 are disposed on a same printed circuit board, an integration level of the electric power conversion system can be improved, so that mounting can be facilitated, and power distribution can be simplified.

In some examples, the first direct current to direct current conversion module, the second direct current to direct current conversion module, and the fault isolation module may be disposed in a plurality of integrated circuits, for example, disposed on a plurality of printed circuit boards. For example, the first direct current to direct current conversion module 21 and the second direct current to direct current conversion module 22 may be disposed on different printed circuit boards.

In a possible implementation, the electric power conversion system may further include a housing that can accommodate the first direct current to direct current conversion module 21, the second direct current to direct current conversion module 22, and the fault isolation module 23. Such a design can facilitate mounting into the new energy vehicle 10, simplify the mounting process of the entire vehicle, and reduce power distribution of the entire vehicle.

In a possible design, the control module 17 of the new energy vehicle 10 determines whether the first direct current to direct current conversion module 21, the second direct current to direct current conversion module 22, the first load module 121, and the second load module 122 are faulty. The control module 17 may detect, by obtaining a voltage or a current of each module, whether the module is faulty. After it is determined that the module is faulty, the fault isolation module 23 in the electric power conversion system is controlled, to implement a function or a capability of the fault isolation module 23 in any one of the foregoing embodiments.

In addition, this application further provides a vehicle, and the vehicle may include the electric power conversion system provided in any one of the foregoing embodiments. The vehicle may be but is not limited to the new energy vehicle 10. The power battery in the vehicle may be configured to supply power to the power system of the vehicle. The electric power conversion system may receive electric energy provided by the power battery, perform voltage conversion processing, for example, buck processing, and provide electric energy obtained after the buck processing to a load module (for example, a low-voltage load module) of the vehicle. The vehicle may further include an auxiliary battery, and the auxiliary battery may supply power to the load module.

The electric power conversion system may continue to supply power to the load module when a fault occurs, to enable the load module to work, so that the vehicle can normally travel, and vehicle usability is improved. For functions or capabilities of the electric power conversion system, refer to related descriptions in the foregoing embodiments. Details are not described herein again.

Although this application is described with reference to specific features and all the embodiments thereof, it is clear that various modifications and combinations may be made to them without departing from the scope of this application. Correspondingly, this specification and the accompanying drawings are merely example description of this application defined by the appended claims, and are considered as any or all of modifications, variations, combinations or equivalents that cover the scope of this application.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An electric power conversion system, configured to: receive electric energy provided by a first power supply and supply power to at least one load module, wherein the system comprises a first direct current to direct current conversion module and a second direct current to direct current conversion module;
the first direct current to direct current conversion module is configured to perform voltage conversion processing on the electric energy, and provide the electric energy to the at least one load module; and
the second direct current to direct current conversion module is configured to perform voltage conversion processing on the electric energy, and provide the electric energy to the at least one load module.

2. The system according to claim 1, wherein the at least one load module comprises a first load module and a second load module, and the system further comprises a fault isolation module;
an input side of the first direct current to direct current conversion module is coupled to the first power supply, an output side of the first direct current to direct current conversion module is coupled to the first load module, and the output side of the first direct current to direct current conversion module is further coupled to the second load module by using the fault isolation module; and
the fault isolation module is configured to connect or disconnect the first direct current to direct current conversion module to/from the second load module.

3. The system according to claim 2, wherein an input side of the second direct current to direct current conversion module is coupled to the first power supply, an output side of the second direct current to direct current conversion module is coupled to the first load module, and the output side of the second direct current to direct current conversion module is further coupled to the second load module by using the fault isolation module; and the fault isolation module is further configured to connect or disconnect the second direct current to direct current conversion module to/from the second load module.

4. The system according to claim 2, wherein an input side of the second direct current to direct current conversion module is coupled to the first power supply, an output side of the second direct current to direct current conversion module is coupled to the second load module, and the output side of the second direct current to direct current conversion module is further coupled to the first load module by using the fault isolation module; and the fault isolation module is further configured to connect or disconnect the second direct current to direct current conversion module to/from the first load module.

5. The system according to any one of claims 1 to 4, wherein some load modules in the at least one load module are coupled to a second power supply, the second power supply is coupled to some other load modules in the at least one load module by using the fault isolation module, and a voltage of the electric energy provided by the second power supply is less than a voltage of the electric energy provided by the first power supply; and
the fault isolation module is further configured to connect/disconnect the second power supply to/from the some other load modules.

6. The system according to any one of claims 2 to 5, wherein the fault isolation module is specifically configured to:
be in a disconnected state when a fault occurs.

7. The system according to claim 6, wherein the fault comprises one or more of the following faults:
a fault of any load module in the at least one load module;
a fault of the second power supply; and
a fault of the first direct current to direct current conversion module, or
a fault of the second direct current to direct current conversion module.

8. The system according to any one of claims 2 to 7, wherein the fault isolation module comprises at least one electronic switch, or at least one mechanical switch, or the combination of at least one electronic switch and at least one mechanical switch.

9. The system according to any one of claims 2 to 8, wherein the first direct current to direct current conversion module, the second direct current to direct current conversion module, and the fault isolation module are disposed in a same integrated circuit.

10. The system according to any one of claims 2 to 9, wherein the electric power conversion system further comprises a housing; and
the housing is configured to accommodate the first direct current to direct current conversion module, the second direct current to direct current conversion module, and the fault isolation module.

11. A vehicle, wherein the vehicle comprises a first power supply, at least one load module, and an electric power conversion system; the electric power conversion system is configured to: receive electric energy provided by the first power supply and supply power to the at least one load module; and the electric power conversion system comprises a first direct current to direct current conversion module and a second direct current to direct current conversion module;
the first direct current to direct current conversion module is coupled to the first power supply and the at least one load module, and is configured to: perform voltage conversion processing on the electric energy, and provide the electric energy to the at least one load module; and
the second direct current to direct current conversion module is coupled to the first power supply and the at least one load module, and is configured to: perform voltage conversion processing on the electric energy, and provide the electric energy to the at least one load module.

12. The vehicle according to claim 11, wherein the electric power conversion system further comprises a fault isolation module;
an input side of the first direct current to direct current conversion module is coupled to the first power supply, an output side of the first direct current to direct current conversion module is coupled to a first load module, and the output side of the first direct current to direct current conversion module is further coupled to a second load module by using the fault isolation module; and
the fault isolation module is configured to connect or disconnect the first direct current to direct current conversion module to/from the second load module.

13. The vehicle according to claim 12, wherein an input side of the second direct current to direct current conversion module is coupled to the first power supply, an output side of the second direct current to direct current conversion module is coupled to the first load module, and the output side of the second direct current to direct current conversion module is further coupled to the second load module by using the fault isolation module; and the fault isolation module is further configured to connect or disconnect the second direct current to direct current conversion module to/from the second load module.

14. The vehicle according to claim 12, wherein an input side of the second direct current to direct current conversion module is coupled to the first power supply, an output side of the second direct current to direct current conversion module is coupled to the second load module, and the output side of the second direct current to direct current conversion module is further coupled to the first load module by using the fault isolation module; and the fault isolation module is further configured to connect or disconnect the second direct current to direct current conversion module to/from the first load module.

15. The vehicle according to any one of claims 12 to 14, wherein the vehicle further comprises a second power supply; some load modules in the at least one load module are coupled to the second power supply, the second power supply is coupled to some other load modules in the at least one load module by using the fault isolation module, and a voltage of the electric energy provided by the second power supply is less than a voltage of the electric energy provided by the first power supply; and
the fault isolation module is further configured to connect/disconnect the second power supply to/from the some other load modules.

16. The vehicle according to any one of claims 12 to 14, wherein the fault isolation module is specifically configured to:
be in a disconnected state when a fault occurs.

17. The vehicle according to claim 16, the fault comprises one or more of the following faults:
a fault of any load module in the at least one load module;
a fault of the second power supply of the vehicle; and
a fault of the first direct current to direct current conversion module, or
a fault of the second direct current to direct current conversion module.
